# EUROPÄISCHE PATENTANMELDUNG

(11) **EP 0 733 917 A2**
(43) Veröffentlichungstag der Anmeldung: **25.09.1996**
(21) Anmeldenummer: 96103250.5
(22) Anmeldetag: 02.03.1996
(51) Int. Cl.: G01V 11/00

(54) **Messsonde für hydrogeologische Messungen**

(30) Priorität: 24.03.1995 DE 19510760
(71) Anmelder: Knapp, Oliver, 73265 Dettingen (DE); Eppinger, Ulrich, 73257 Köngen (DE); Dallinger, Frank, 70565 Stuttgart (DE); Dr. Jungbauer + Partner Umwelt Consult GmbH, 70499 Stuttgart (DE)
(72) Erfinder: Knapp, Oliver, Dipl.-Ing., 73265 Dettingen (DE); Eppinger, Ulrich, Dipl.-Ing., 73257 Köngen (DE); Dallinger, Frank, Dipl.-Ing., 70565 Stuttgart (DE); Voutta, André, Dipl.-Geol., 71083 Herrenberg (DE)
(74) Vertreter: Gleiss & Grosse

(57) **Zusammenfassung**

Die Erfindung betrifft eine Meßsonde zur Ermittlung hydraulischer Kennwerte in einer Bohrung. Es ist vorgesehen, zwischen einem Kopfmodul (15) und einem Abschlußmodul (17) mindestens ein Arbeitsmodul (21; 27; 33; 49; 55) austauschbar anzuordnen.

## Beschreibung

Die vorliegende Erfindung betrifft eine Meßsonde (Meßsystem, insbesondere Packer-Meßsystem) für hydrogeologische Messungen gemäß Oberbegriff des Patentanspruchs 1.

Zur Ermittlung von hydraulischen Kennwerten eines Bohrlochs werden Meßsonden eingesetzt, die unterschiedliche Meßmöglichkeiten zulassen. Die Anordnung und Zusammenstellung der einzelnen Meßbereiche wird für den jeweiligen Anwendungszweck fest vorgegeben. Eine solche nach Maß konzipierte Meßsonde ist verständlicherweise teuer und erfordert im übrigen eine lange Vorausplanung. Kurzfristige Änderungen, Anpassungen an veränderte Umweltbedingungen oder Ähnliches ist nicht oder nur mit entsprechend hohem finanziellen Aufwand möglich.

Die Aufgabe der vorliegenden Erfindung besteht deshalb darin, eine Meßsonde vorzusehen, der die oben genannten Nachteile nicht mehr anhaften. Insbesondere soll die Meßsonde schnell an die vorhandenen Gegebenheiten anpaßbar sein ohne daß ein hoher und kostenträchtiger Planungsaufwand notwendig wäre.

Diese Aufgabe wird durch die Meßsonde mit den Merkmalen des Patentanspruchs 1 gelöst. Dadurch, daß die Meßsonde aus beliebig zusammensetzbaren Arbeitsmodulen aufgebaut ist, können Änderungen oder Anpassungen der Meßsonde einfach und schnell ausgeführt werden. Mit Hilfe von Arbeitsmodulen, die jeweils für unterschiedliche Aufgaben beziehungsweise Messungen vorbereitet sind, lassen sich unterschiedliche Messungen in kurzer zeitlicher Abfolge durchführen, wobei lediglich einzelne Module versetzt oder durch andere Module ersetzt werden müssen.

Darüber hinaus sind die einzelnen Arbeitsmodule in größeren Stückzahlen herstellbar, was dann zu günstigeren Preisen führt. Vorzugsweise sind mehrere Arbeitsmodule hintereinander, also in Reihe geschaltet, wobei die einzelnen Steuer- und Versorgungsleitungen für Strom, Wasser und Luft durch die gesamte Meßsonde hindurchgeführt sind, so daß bei Bedarf jedes Modul Zugriff auf die einzelnen Leitungen nehmen kann.

In einer Weiterbildung der Meßsonde ist eine Steuereinheit vorgesehen, an die die Steuerleitungen beziehungsweise die Versorgungsleitungen angeschlossen sind. Vorzugsweise sind die elektrischen Steuerleitungen als Bus ausgelegt, wobei vorzugsweise den einzelnen Arbeitsmodulen unterschiedliche Identifikationsnummern zugeordnet sind, die es der Steuereinheit ermöglichen, den genauen Aufbau der Meßsonde zu ermittlen.

Weitere vorteilhafte Ausgestaltungen der Meßsonde ergeben sich aus den Unteransprüchen.

Im folgenden wird nun mit Bezug auf die Zeichnung ein Ausführungsbeispiel detailliert beschrieben. Dabei zeigen:
- Figur 1: eine schematische Darstellung einer Meßsonde in einem Bohrloch;
- Figuren 2a bis 2h: in schematischer Darstellung verschiedenen Arbeitsmodule;
- Figur 3: einen Querschnitt im Bereich einer Verbindungsstelle zwischen zwei Arbeitsmodulen und
- Figur 4a bis 4f: mehrere unterschiedlich zusammengesetzte Meßsonden.

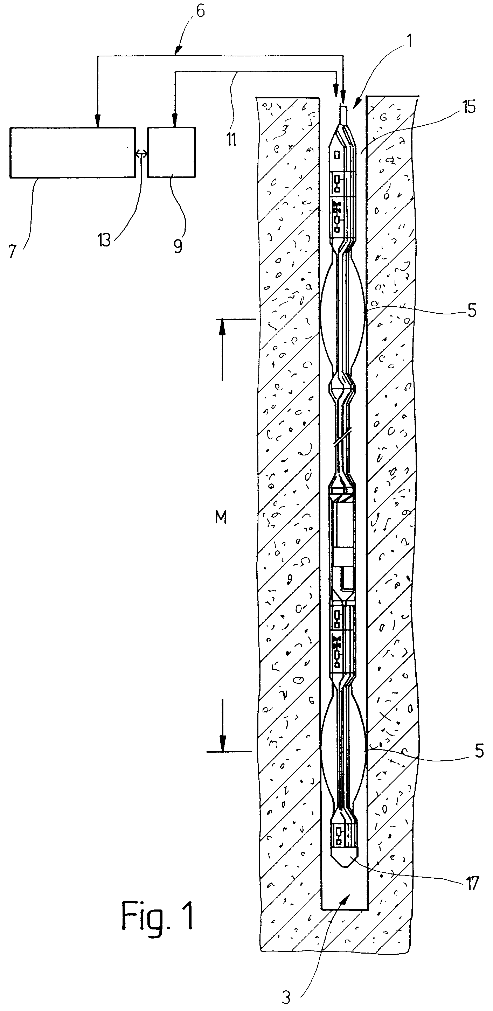

In Figur 1 ist eine Meßsonde 1 dargestellt, die sich in einem schematisch angedeuteten Bohrloch 3 befindet. Diese Meßsonde 1 ist zur Ausführung eines sogenannten "Doppel-Packertests" ausgelegt. Doppel-Packertest-Verfahren kommen immer dann zum Einsatz, wenn die hydraulischen Kennwerte nur für einen definierten Abschnitt innerhalb eines Bohrlochs zu bestimmen sind. Um den zu vermessenden Abschnitt vom Rest des Bohrlochs abzutrennen, sind sogenannte "Packer" 5 vorgesehen, die den dazwischenliegenden Abschnitt abschirmen. Innerhalb dieses Abschnitts beziehungsweise Meßintervalls M weist die Meßsonde 1 verschiedene Arbeitsmodule auf, die unterschiedliche Meß- und Testverfahren ermöglichen.

Die gesamte Meßsonde 1 durchziehen Versorgungsleitungen für Strom, Wasser und Druckluft sowie Steuerleitungen, so daß jedes Arbeitsmodul bei Bedarf darauf zugreifen kann. Die Meßsonde 1 selbst ist über entsprechende Versorgungsleitungen 6 mit einer Versorgungseinheit 7 verbunden, die die Versorgungsmedien bereitstellt. Die Steuerung der Versorgungseinheit 7 sowie die Auswertung der aufgezeichneten Meßwerte erfolgt über eine Steuereinheit 9, an die die Steuer- und Meßleitungen 11 der Meßsonde 1 angeschlossen sind. Über eine weitere Steuerleitung 13 erfolgt die Steuerung der Versorgungseinheit 7.

Die Meßsonde 1 ist, wie bereits erwähnt, modular aus einzelnen Arbeitsmodulen aufgebaut, die zwischen einem Kopfmodul 15 und einem Abschlußmodul 17 liegen.

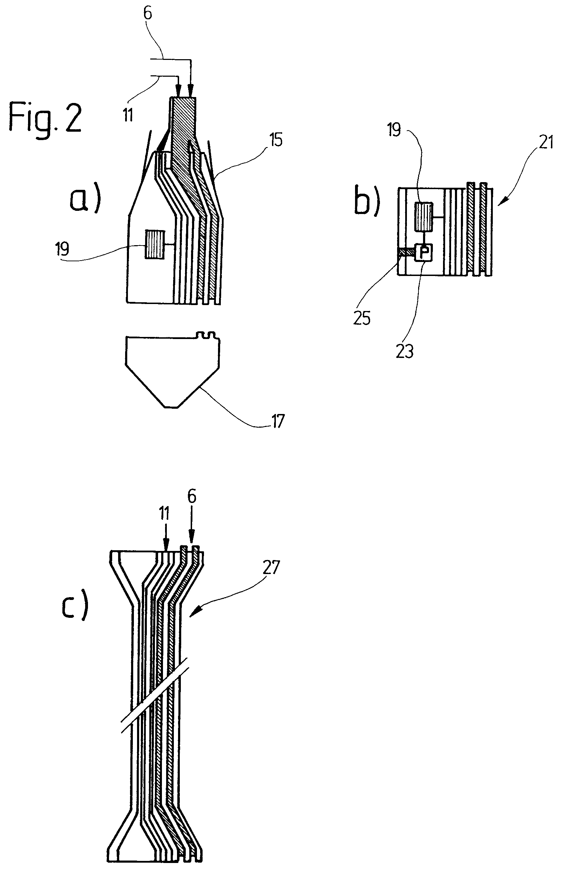

Mit Bezug auf die Figuren 2a bis 2h werden nun die einzelnen Arbeitsmodule näher beschrieben. Das bereits erwähnte Kopfmodul 15 und das Abschlußmodul 17 sind in Figur 2a dargestellt. Beide Arbeitsmodule sind für jede Meßsonde 1 erforderlich. Das Kopfmodul 15 enthält dabei wichtige Elemente zur Energie- und Druckversorgung der Meßsonde 1. Darüber hinaus sind an deren einem Ende Anschlüsse für die Versorgungsleitungen 6, das heißt beispielsweise für die Stromversorgung, Druckluft oder gefördertes Wasser, sowie für die Steuerleitungen 11 vorgesehen. Vorzugsweise sind die Steuerleitungen 11 als Bussystem ausgelegt. Die Leitungen 6 und 11 durchsetzen das Kopfmodul 15 und liegen am anderen Ende zum Abgriff frei.

Zusätzlich weist das anschlußseitige Ende des Kopfmoduls eine Befestigungsvorrichtung beispielsweise ein Seil auf, an dem die Meßsonde 1 in das Bohrloch abgelassen werden kann. Desweiteren verfügt das Kopfmodul über ein Gewinde, an das ein Steigrohr anschraubbar ist.

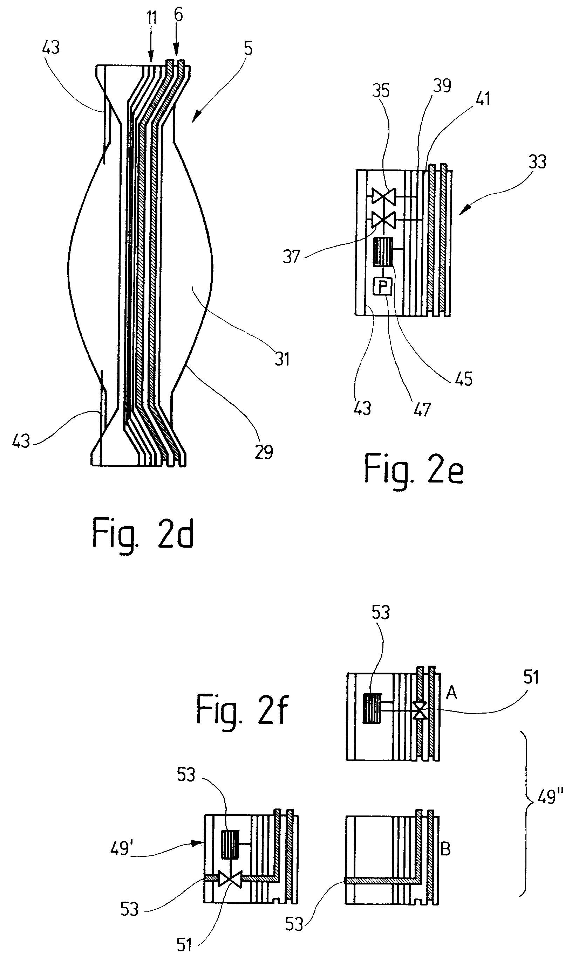

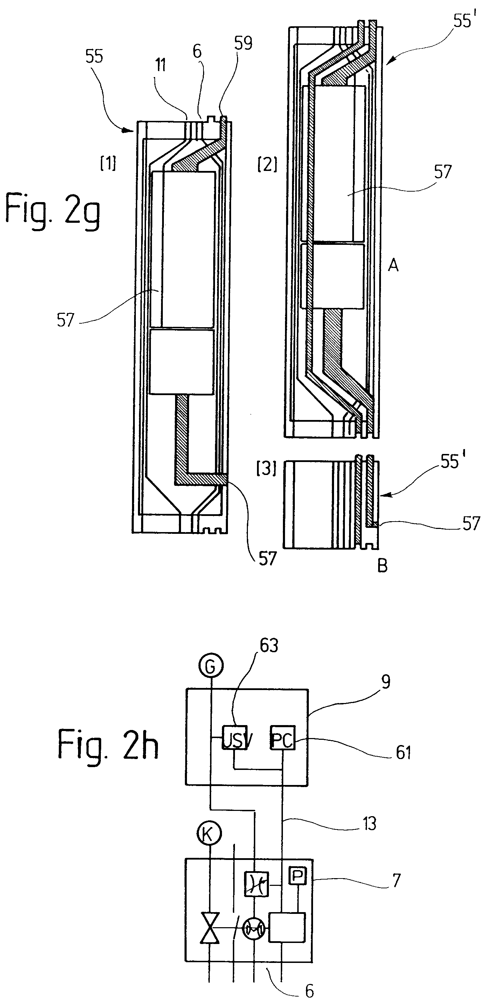

Innerhalb des Kopfmoduls 15 können beispielsweise Meßwertaufnehmer vorgesehen sein, die beispielsweise den Druck in der Druckluftleitung oder die Spannung der Spannungsversorgung erfassen und über Steuerleitungen 11 an die Steuereinheit 9 übertragen. Ein solcher Meßwertaufnehmer 19 ist schematisch in Figur 2 dargestellt. Selbstverständlich können auch komplette Regeleinheiten innerhalb eines solchen Kopfmoduls 15 vorhanden sein, die beispielsweise eine Druckluftregelung oder eine Spannungsregelung durchführen.

Das Abschlußmodul 17 ist ebenfalls für jede Meßsonde erforderlich und dient dazu, die durch die gesamte Meßsonde 1 durchgeführten Versorgungs- und Steuerleitungen 6, 11 am Ende abzuschließen. Bei den Wasser- und Druckluftleitungen erfolgt der Abschluß beispielsweise durch ein einfaches abdichtendes Element, das auf ein Leitungsende des darüberliegenden Arbeitsmoduls aufgesetzt wird, oder beispielsweise durch einfache im Abschlußmodul 17 vorgesehene Sackbohrungen. Bei den Steuerleitungen sind gegebenenfalls Abschlußwiderstände notwendig.

In der Figur 2b ist ein Druck-Meßmodul gezeigt, das beispielsweise den hydrostatischen Druck außerhalb des Moduls oder in einer Steigleitung mißt. Zur Messung ist innerhalb des Moduls 21 ein Drucksensor 23 vorgesehen, der über eine Leitung 25 mit der Umgebung verbunden ist.

Da die Steuerleitungen 11 als Bussystem ausgelegt sind, werden die vom Drucksensor gelieferten elektrischen Signale nicht direkt an die Steuereinheit 9 übertragen, sondern zunächst an einen Meßwertaufnehmer beziehungsweise eine Meßwertschnittstelle 19 geliefert, die die Kommunikation mit dem Steuerbus 11 übernimmt.

Neben dem Drucksensor 23 umfaßt das Arbeitsmodul 21 bei Bedarf auch einen Temperatursensor (nicht gezeigt), der die Umgebungstemperatur mißt.

In Figur 2c ist ein Verlängerungsmodul 27 dargestellt. Das Verlängerungsmodul 27 dient dazu, die Meßsonde an die örtlichen Gegebenheiten anzupassen. So kann beispielsweise die Gesamtlänge der Meßsonde wie auch die Lange des Meßintervalls M eingestellt werden. Vorzugsweise sind Verlängerungsmodule 27 mit unterschiedlicher Langenabstufung vorgesehen. Allen Verlängerungsmodulen 27 ist gemeinsam, daß die Versorgungsleitungen 6 sowie der Steuerbus 11 vollständig durch jedes Modul geführt ist.

Der bereits mit Bezug auf Figur 1 erwähnte Packer 5 ist nochmals deutlich in Figur 2d dargestellt. Wie bei den vorher genannten Arbeitsmodulen sind auch hier die Versorgungsleitungen 6 sowie der Steuerbus 11 vollständig durch den Packer 5 durchgeführt. Der Packer 5 ist von einem elastischen Schlauch 29 umgeben, der an seinen beiden Enden dichtend am Packer 5 befestigt ist. Der so entstehende nach außen abgedichtete Raum 31 kann über entsprechende Leitungen und Ventile, die in Figur 2d nicht gezeigt sind, über eine Druckluftversorgungsleitung mit Luft befüllt werden. Durch die Elastizität des Schlauchs 29 bläht sich dieser ballonartig auf, wobei sich die Schlauchwand zumindest bereichsweise an die Innenwandung der Bohrung 3 anlegt. Bei entsprechend großem Innendruck im Innenraum 31 kann auf diese Art und Weise eine Abschirmung zwischen dem unterhalb des Packers liegenden Bohrlochraum und dem darüberliegenden Bohrlochraum geschaffen werden.

Die zum Befüllen des Innenraums 31 notwendige Regeleinheit ist in Figur 2e als selbständiges Modul 33 gezeigt. Dieses Regelmodul 33 enthält zwei Ventile 35, 37 die an unterschiedlichen Versorgungsleitungen 39, 41 angeschlossen sind. Des weiteren sind beide Ventile 35, 37 an eine gemeinsame Leitung 43 angeschlossen, die zum Innenraum 31 führt, wenn das Modul 33 auf den Packer 5 aufgesteckt ist. Die beiden Ventile 35 und 37 werden über eine Regeleinheit 45 angesteuert, die von einem Drucksensor 47 Informationen über die Druckverhältnisse im Innenraum 31 erhält. Wird das Ventil 35 geöffnet, so strömt über die Druckluftleitungen 39 und 43 Luft in den Innenraum 31, worauf sich der Schlauch 29 aufbläht. Sobald der von der Steuereinheit 9 vorgegebene Innendruck erreicht ist, schließt die Steuereinheit 45 dieses Ventil 35 wieder. Soll der Druck im Innenraum 31 verringert werden, schaltet die Steuereinheit 45 das Ventil 37, worauf die Luft über die Leitung 41 abfließen kann, solange bis der gewünschte Druck erreicht ist.

Neben der Ansteuerung eines Packers 5 kann das Regelmodul 33 auch mehrere Packer 5 ansteuern.

In Figur 2f sind sogenannte "Shut-In-Module" 49 in verschiedenen Ausführungen gezeigt. Solche Shut-In-Module werden für nahezu alle Bohrlochtests benötigt. Sie enthalten ein verdrängungsfrei schaltendes Ventil, mit dem der hydrostatische Druck des betreffenden Meßabschnitts durch schlagartiges Öffnen mit dem Steigrohr in Kontakt kommt, so daß wahlweise ein Über- oder Unterdruck entsteht. Die Steuerung des Ventils 51 erfolgt wiederum über eine Steuereinheit 53, die über den Steuerbus in Verbindung mit der Steuereinheit 9 steht.

Das Shut-In-Modul 49' umfaßt alle notwendigen Elemente einschließlich einem in die Umgebung führenden Auslaß 53. Das Modul 49' muß deshalb innerhalb des Meßintervalls M angeordnet sein.

Im Gegensatz dazu ist das Shut-In-Modul 49'' zweigeteilt. Das Ventil 51 und die Steuereinheit 53 sind im ersten Modul A untergebracht, während der Auslaß 53 getrennt in dem zweiten Modul B vorgesehen ist. Bei dieser Ausführung muß lediglich das den Auslaß 53 aufweisende Modul B im Meßintervall M plaziert sein. Das andere Modul A ist an beliebiger Stelle oberhalb des Moduls B anordenbar. Aufgrund des geringeren Platzbedarfs des Moduls B gegenüber dem Modul 49' kann die Länge des Meßintervalls verringert werden.

In Figur 2g sind zwei Ausführungsformen eines Pumpenmoduls 55 dargestellt. Solche Pumpenmodule werden für Produktionsversuche benötigt, um beispielsweise aus dem Meßintervall M Wasser abzusaugen. Das Pumpenmodul 55 weist dafür eine Pumpe 57, vorzugsweise eine Unterwasserpumpe gängiger Art, auf. Das abzusaugende Wasser gelangt über einen Einlaß 57 zur Pumpe und von dort über eine weitere Leitung 59 zum Kopfmodul. Die Energieversorgung der Pumpe 57 erfolgt über die Versorgungsleitungen 6, die Pumpensteuerung über den Steuerbus 11.

Die zweite Ausführungsform des Pumpenmoduls 55' ist zweigeteilt, wobei das obere Modul A die Pumpe 57 aufweist, während das untere Modul B den Einlaß 57 umfaßt. Wie bereits im Zusammhang mit der Figur 2f erläutert, kann durch diese zweite Ausführungsform die Länge des Meßintervalls M verringert werden, indem das Modul A außerhalb des Meßintervalls und nur das Modul B innerhalb des Meßintervalls M plaziert wird.

Das Gehäuse des Moduls 55 ist vorzugsweise als aufklappbarer Käfig ausgebildet, so daß die Pumpe in einfacher Weise eingebracht beziehungsweise leicht gewechselt werden kann. Die Versorgungsleitungen 6 sowie der Steuerbus 11 sind an der Pumpe vorbeigeführt.

Figur 2h zeigt in Form eines Blockdiagramms die Steuereinheit 9 und die Versorgungseinheit 7.

Die Steuereinheit 9 umfaßt einen Industrie-PC 61 und eine unterbrechungsfreie Stromversorgung 63, die auch bei einem Totalausfall der Energieversorgung eine kurze Zeit vor den Weiterbetrieb der Anlage gewährleistet.

Die Versorgungseinheit 7 dient der Verteilung und Überwachung der Versorgungsleitungen. Darüber hinaus umfaßt sie einen Durchflußregler mit induktiven Durchflußmesser zur Regelung der Pumpenförderrate, sowie einen atmosphärischen Referenzdruckmesser für die Kompensation der gemessenen Drücke.

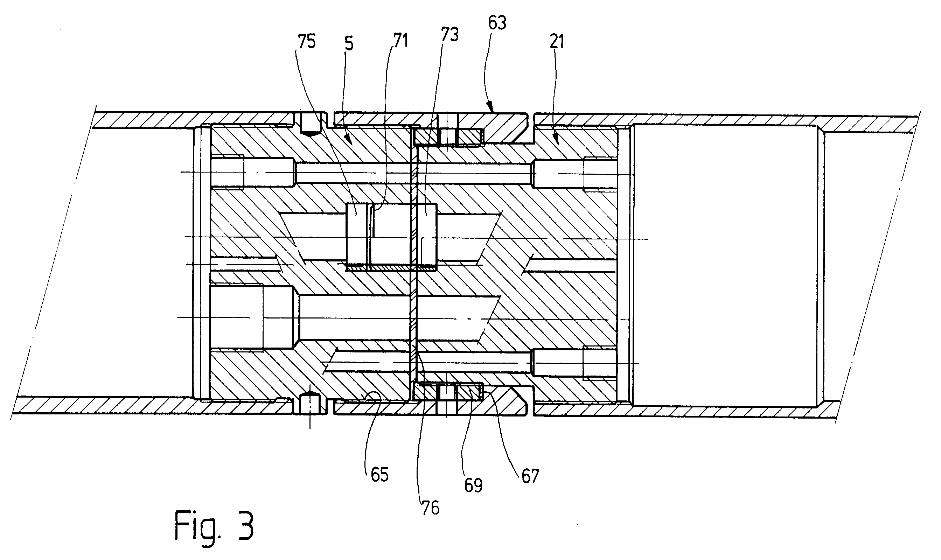

Eine Ausführung einer Verbindung von einzelnen zuvor beschriebenen Modulen ist in Figur 3 gezeigt. In diesem Fall ist beispielsweise ein Druck-Meßmodul 21 mit einem Packer 5 verbunden. In dem gezeigten Querschnitt sind deutlich die jedes Modul durchsetzenden Versorgungsleitungen zu erkennen. Die Verbindung erfolgt mittels einer Überwurfmutter 63, die auf ein entsprechend angepaßtes Ende 65 des Packers 5 aufschraubbar ist. Beim Aufschrauben gelangt ein nach innen ragender Vorsprung 67 der Überwurfmutter 63 in Anlage mit einem am Meßmodul 21 vorgesehenen Anschlag und zieht das Druck-Meßmodul 21 dabei an den Packer 5.

Die Verbindung von sich gegenüberliegenden Leitungen zweier Module erfolgt beispielsweise mittels einer Hülse 71, die im vorliegenden Fall fest in der Bohrung 73 des Druck-Meßmoduls 21 angeordnet ist. Beim Verbinden der beiden Module dringt diese Hülse 71 in die gegenüberliegende Bohrung 75 des Packers 5 ein. Durch eine Flachdichtung 76 erfolgt eine Abdichtung nach außen, sowie der durchsetzenden Versorgungsleitungen untereinander.

Selbstverständlich sind auch andere dichtende Verbindungsmöglichkeiten denkbar.

Die elektrische Verbindung zweier Module kann beispielsweise über übliche Steckkontakte erfolgen.

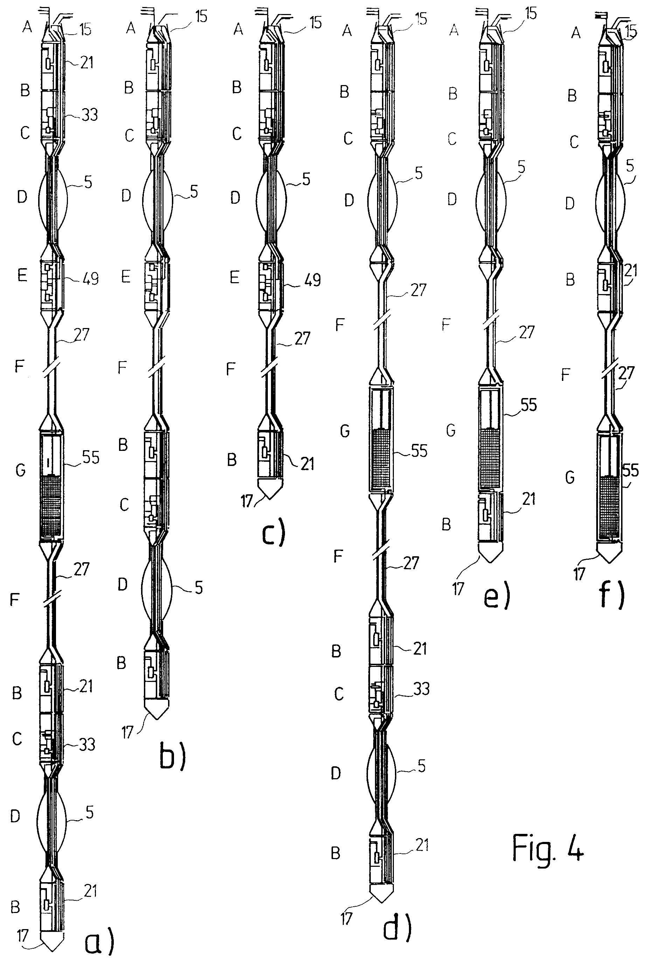

Figur 4 zeigt nun verschiedene Kombinationsmöglichkeiten der mit Bezug auf die Figur 2 genannten Module.

In Figur 4a enthält die Meßsonde 1 zwischen dem Kopfmodul 15 und dem Abschlußmodul 17 zunächst ein Druck-Meßmodul 21 danach die Kombination aus Regelmodul 33 und Packer 5. Daran schließt sich ein Shut-In-Modul 49, ein Verlängerungsmodul 27, ein Pumpenmodul 55, ein Verlängerungsmodul 27 und ein Druck-Meßmodul 21 an. Das Meßintervall wird nach unten begrenzt durch den zweiten Packer 5, dem ein Regelmodul 33 vorgeschaltet ist. Zwischen Abschlußmodul 17 und dem zweiten Packer 5 ist nochmals ein Druck-Meßmodul 21 vorgesehen.

Die in Figur 4b gezeigte Meßsonde ist in ähnlicher Weise aufgebaut, wobei jedoch im Meßintervall zwischen den beiden Packern 5 auf das Pumpenmodul 55 und ein zweites Verlängerungsmodul 27 verzichtet wurde. Auch die in Figur 4d gezeigte Kombinationsmöglichkeit ähnelt der Meßsonde in Figur 4a, wobei jedoch innerhalb des Meßintervalls auf das Shut-In-Modul 49 verzichtet wurde.

Den in den Figuren 4c, e und f angegebenen Kombinationen ist gemeinsam, daß sie nur ein Packer 5 aufweisen. Die Meßsonde gemäß Figur 4c umfaßt nach dem Packer 5 ein Shut-In-Modul 49, ein Verlängerungsmodul 27 sowie ein Druck-Meßmodul 21.

Die Meßsonde gemäß Figur 4e umfaßt nach dem Packer 5 lediglich ein Verlängerungsmodul 27, ein Pumpenmodul 55 und ein Druck-Meßmodul 21. Die Meßsonde gemäß Figur 4f ist ähnlich aufgebaut, wobei lediglich das Druck-Meßmodul 21 noch oben versetzt wurde.

In allen sechs in Figur 4 gezeigten Ausführungsformen einer Meßsonde ist deutlich zu erkennen, daß die Versorgungs- und Steuerleitungen vom Kopfmodul 15 bis zum Abschlußmodul 17 durchgeführt sind. Über eine entsprechende fest vorgegebene Codierung jedes einzelnen Moduls erhält die Steuereinheit 9 über den Steuerbus Informationen über den genauen Aufbau der Meßsonde. Eine Eingabe des Aufbaus per Hand entfällt somit.

Selbstverständlich sind auch andere Kombinationsmöglichkeiten der in Figur 2 beschriebenen Module möglich.

## Patentansprüche

1. Meßsonde zur Ermittlung hydraulischer Kennwerte in einer Bohrung, **gekennzeichnet durch** ein Kopfmodul (15) und ein Abschlußmodul (17), wobei zwischen Kopfmodul (15) und Abschlußmodul (17) mindestens ein Arbeitsmodul (21; 27; 33; 49; 55) austauschbar angeordnet ist.

2. Meßsonde nach Anspruch 1, **dadurch gekennzeichnet**, daß mehrere Arbeitsmodule in einer gewünschten Reihenfolge angeordnet sind.

3. Meßsonde nach einem der vorhergehenden Ansprüche, **dadurch gekennzeichnet**, daß Versorgungs- und Steuerleitungen (6, 11) vom Kopfmodul (15) bis zum Abschlußmodul (17) durch die Arbeitsmodule durchgeführt sind.

4. Meßsonde nach einem der vorhergehenden Ansprüche, **gekennzeichnet durch** eine Versorgungseinheit (7, 9) die mit den Versorgungs- und Steuerleitungen verbunden ist.

5. Meßsonde nach einem der vorhergehenden Ansprüche, **dadurch gekennzeichnet**, daß die Steuerleitungen als Bus ausgelegt sind.

6. Meßsonde nach einem der vorhergehenden Ansprüche, **dadurch gekennzeichnet**, daß jedem Arbeitsmodul eine über die Steuerleitungen abfragbare Identifikationsnummer zugeordnet ist.

7. Meßsonde nach einem der vorhergehenden Ansprüche**, dadurch gekennzeichnet**, daß die mehreren Arbeitsmodule unterschiedliche Funktionen ausführen.

8. Meßsonde nach einem der vorhergehenden Ansprüche, **dadurch gekennzeichnet**, daß die einzelnen Module mittels einer Verschraubung und/oder einem Bajonettverschluß miteinander verbindbar sind.
